# EUROPÄISCHE PATENTANMELDUNG

(11) **EP 0 795 586 A2**
(43) Veröffentlichungstag der Anmeldung: **17.09.1997**
(21) Anmeldenummer: 97103608.2
(22) Anmeldetag: 05.03.1997
(51) Int. Cl.: C09B 67/22, D06P 1/384, C09B 62/503

(54) **Farbstoffmischungen von faserreaktiven Disazofarbstoffen**

(30) Priorität: 13.03.1996 DE 19609766
(71) Anmelder: BASF AKTIENGESELLSCHAFT, 67056 Ludwigshafen (DE)
(72) Erfinder: Löffler, Hermann, 67346 Speyer (DE); Patsch, Manfred, Dr., 67157 Wachenheim (DE)

(57) **Zusammenfassung**

Farbstoffmischungen, enthaltend mindestens einen Farbstoff der Formel I 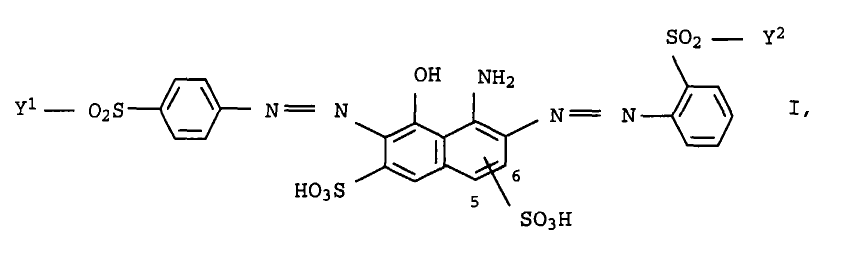 in der Y¹ und Y² unabhängig voneinander Vinyl oder einen Rest der Formel CH₂CH₂Q bedeuten, worin Q für eine unter alkalischen Reaktionsbedingungen abspaltbare Gruppe steht, sowie mindestens einen gelben, orangen, roten oder blauen Farbstoff mit Reaktivankerresten, ein Verfahren zur ihrer Herstellung, sowie ihre Verwendung zum Färben oder Bedrucken von Hydroxygruppen oder Stickstoffatome aufweisenden organischen Substraten.

## Beschreibung

Die vorliegende Erfindung betrifft neue Farbstoffmischungen, enthaltend mindestens einen Farbstoff der Formel I 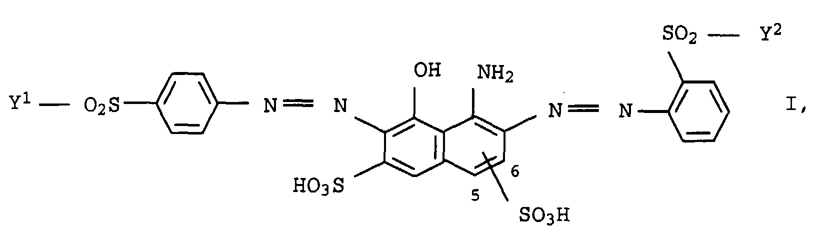 in der Y¹ und Y² unabhängig voneinander Vinyl oder einen Rest der Formel CH₂CH₂Q bedeuten, worin Q für eine unter alkalischen Reaktionsbedingungen abspaltbare Gruppe steht, sowie mindestens einen gelben, orangen, roten oder blauen Farbstoff mit Reaktivankerresten,
ein Verfahren zu ihrer Herstellung, sowie ihre Verwendung zum Färben oder Bedrucken von Hydroxygruppen oder Stickstoffatome aufweisenden organischen Substraten.

Die Praxis des Färbens mit Reaktivfarbstoffen hat in neuerer Zeit zu erhöhten Anforderungen an die Qualität der Färbungen und die Wirtschaftlichkeit sowie Sicherheit des Färbeprozesses geführt. Infolgedessen besteht weiterhin ein Bedarf nach neuen Reaktivfarbstoffen und -mischungen, die verbesserte Eigenschaften, insbesondere bei ihrer Anwendung aufweisen.

Für das Färben von Baumwolle werden heute Reaktivfarbstoffmischungen gefordert, deren Reaktivität sowohl die Anwendung nach dem Kaltverweilverfahren mit kurzen Fixierzeiten als auch nach dem Warmausziehverfahren in breitem Temperaturbereich ermöglichen. Solche Farbstoffmischungen sollen nach beiden Methoden Färbungen mit hohen Fixiergraden liefern. Von bekannten Farbstoffen und Mischungen im Marineblau-Bereich werden diese Anforderungen nur ungenügend erfüllt.

Dies trifft z.B. auf den Farbstoff der Formel IIa' 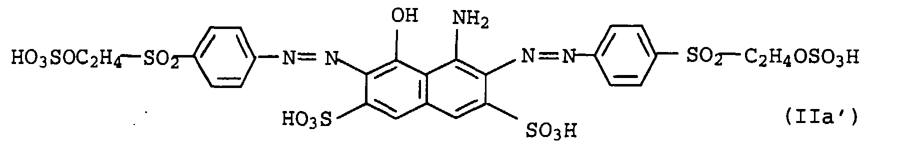 zu, der unter dem Namen C.I. Reactive Black 5 (20 505) bekannt ist.

Aus der DE-A 960 534 ist der Farbstoff 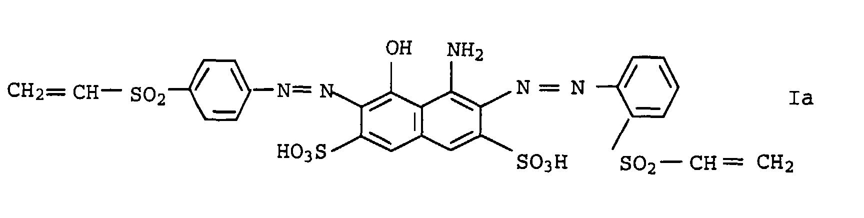 bekannt.

Ferner sind beispielsweise aus der EP-A 600 322 und DE 44 14 320 Farbstoffmischungen mit Reaktive Black 5 bekannt. Jedoch sind auch die Breitfärbeeigenschaften dieser Mischungen nicht zufriedenstellend.

Aufgabe der vorliegenden Erfindung war es, neue Farbstoffmischungen enthaltend faserreaktive Disazofarbstoffe mit einer Kupplungskomponente aus der Reihe der 1-Hydroxy-8-aminonaphthalinsulfonsäuren bereitzustellen. Die neuen Mischungen sollten sich für beide Applikationsverfahren eignen und die obengenannten Qualitäten aufweisen. Insbesondere sollten sie sich vor allem durch hohe Fixierausbeuten und hohe Faser-Farbstoff-Bindungsstabilitäten auszeichnen, und außerdem sollten die nicht auf der Faser fixierten Anteile leicht auswaschbar sein. Sie sollten ferner Färbungen mit guten Allgemeinechtheiten, beispielsweise Licht- und Naßechtheiten, ergeben.

Demgemäß wurden die eingangs näher bezeichneten Farbstoffmischungen gefunden.

Die Reaktivfarbstoffmischungen sind jeweils in Form der freien Säuren angegeben. Selbstverständlich werden auch Mischungen ihrer Salze von den Patentansprüchen umfaßt.

Geeignete Kationen leiten sich von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium- oder Piperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch 1 oder 2 Hydroxygruppen substituiert und/oder durch 1 bis 4 Sauerstoffatome in Etherfunktion unterbrochen sein kann.

Alle in der vorliegenden Anmeldung auftretenden Alkylreste können sowohl geradkettig als auch verzweigt sein.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O) (OH)₂, C₁-C₄-Alkylsulfonyloxy, Phenylsulfonyloxy, C₁-C₄-Alkanoyloxy, C₁-C₄-Dialkylamino oder ein Rest der Formel 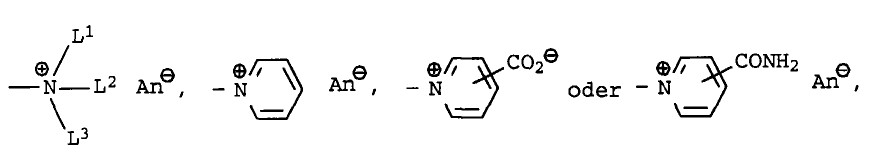 wobei L¹, L² und L³ unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Bevorzugt werden Farbstoffmischungen enthaltend mindestens einen Farbstoff der Formel I und mindestens einen Farbstoff aus der Gruppe der blauen Farbstoffe der allgemeinen Formel II 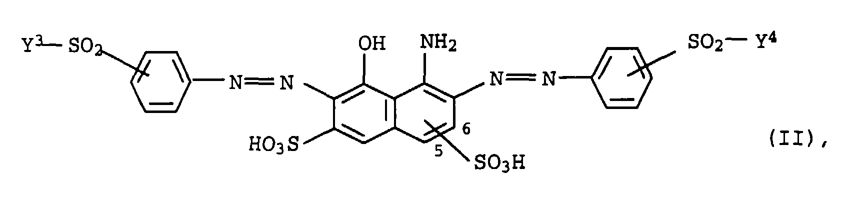 in der Y³ und Y⁴ unabhängig voneinander Vinyl oder einen Rest der Formel CH₂CH₂Q bedeuten, und die Farbstoffe die folgenden Substituentenkombinationen aufweisen:

| Y³SO₂- | Y⁴SO₂- | Farbstoff |
|---|---|---|
| para | para | IIa |
| meta | ortho | IIb |
| ortho | ortho | IIc |
| meta | para | IId |
| ortho | meta | IIe |
| meta | meta | IIf |
| para | meta | IIg |
| ortho | para | IIh |

Von besonderer Bedeutung sind Farbstoffmischungen enthaltend mindestens einen Farbstoff der Formel I und mindestens einen Farbstoff der Formel IIa, insbesondere Reactive Black 5.

Weiterhin werden Farbstoffmischungen bevorzugt, die mindestens einen Farbstoff der Formel I und mindestens einen Farbstoff der Formel IIb, IIc oder IId enthalten. Insbesondere werden Mischungen enthaltend mindestens je einen Farbstoff der Formel I und IIa und mindestens einen Farbstoff der Formel IIb, IIc oder IId bevorzugt.

Bevorzugt werden Farbstoffmischungen, die sich ausschließlich aus den oben genannten Farbstoffkombinationen zusammensetzen.

In bevorzugten Mischungen sind zwei bis vier der Einzelfarbstoffe in beliebigem Mischungsverhältnis enthalten.

Von besonderer Bedeutung sind Farbstoffmischungen, die bezogen auf das Gesamtgewicht der Farbstoffe, 10 bis 90 Gew.-%, vorzugsweise 20 bis 80 Gew.-%, des Farbstoffs I sowie 10 bis 90 Gew.-%, vorzugsweise 20 bis 80 Gew.-%, mindestens eines Farbstoffs der Formel II insbesondere IIa enthalten.

Ferner sind Farbstoffmischungen, enthaltend einen Farbstoff der Formel I sowie mindestens einen gelben, orangen oder roten Farbstoff mit Reaktivankerresten, also solchen Resten, die mit den Hydroxygruppen oder Stickstoffatome enthaltenden Gruppen der zu behandelnden Substrate additiv und/oder substitutiv reagieren, bevorzugt.

Daß der Ankerrest mit den betreffenden Gruppen in den Substraten, z.B. mit den Hydroxygruppen der Cellulose, substitutiv reagiert, bedeutet, daß die Austrittsgruppen oder -atome (z.B. Fluor oder Chlor) im Ankerrest durch die Hydroxygruppen der Cellulose gemäß folgendem Schema substituiert werden:

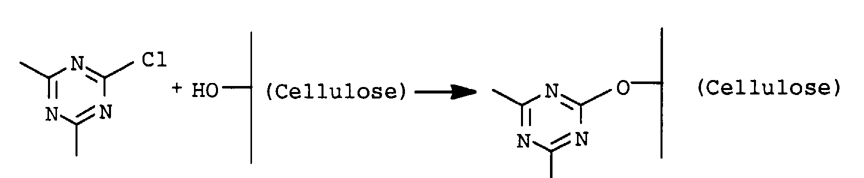

Daß der Ankerrest mit betreffenden Gruppen in den Substraten, z.B. mit Hydroxygruppen der Cellulose, additiv reagiert, bedeutet, daß die Hydroxygruppen der Cellulose gemäß folgendem Schema an den Apkerrest addiert werden:

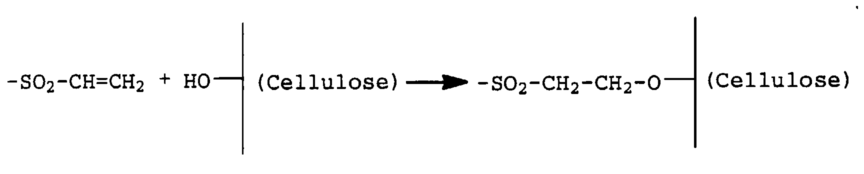

Die hierbei reagierenden Vinylsulfone sind aus den entsprechenden Sulfonen SO₂CH₂CH₂Q durch Eliminierung erhältlich.

Geeignete gelbe Reaktivfarbstoffe sind z.B. in der US-A-5 182 371 beschrieben. Weiterhin sind folgende Farbstoffe zu nennen: C.I. Reactive Yellow 145, C.I. Reactive Yellow 168 oder C.I. Reactive Yellow 176.

Geeignete orange Reaktivfarbstoffe gehorchen z.B. den Formeln

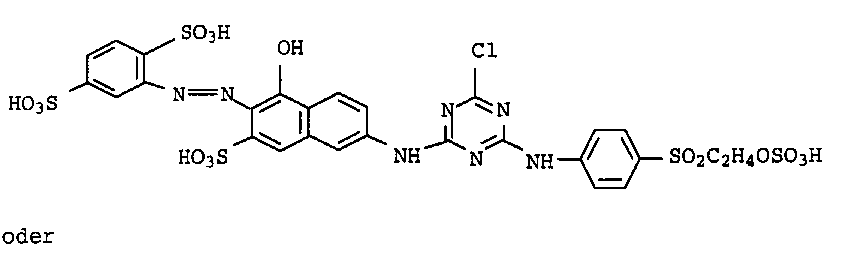

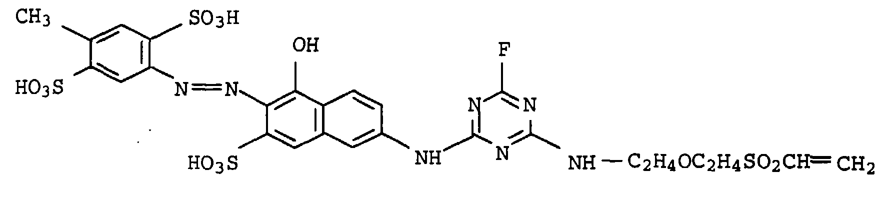

Weiterhin sind folgende Farbstoffe zu nennen: C.I. Reactive Orange 7 (17 756), C.I. Reactive Orange 15, C.I. Reactive Orange 16 (17 757), C.I. Reactive Orange 56, C.I. Reactive Orange 57, C.I. Reactive Orange 72 (17 754), C.I. Reactive Orange 74, C.I. Reactive Orange 82, C.I. Reactive Orange 83 oder C.I. Reactive Orange 90.

Geeignete rote Reaktivfarbstoffe sind z.B. in der US-A-5 200 511 beschrieben. Weiterhin sind folgende Farbstoffe zu nennen: C.I. Reactive Red 35, C.I. Reactive Red 103, C.I. Reactive Red 113, C.I. Reactive Red 180, C.I. Reactive Red 194, C.I. Reactive Red 195, C.I. Reactive Red 198, C.I. Reactive Red 222, C.I. Reactive Red 223, C.I. Reactive Red 227, C.I. Reactive Red 228 oder C.I. Reactive Red 239.

Geeignete Farbstoffe gehorchen insbesondere der Formel III

[ A ― N = N ― K ― ] ₘ ^{Z} (III),

in der
- m: 1 oder 2,
- K: einen Rest der Formel 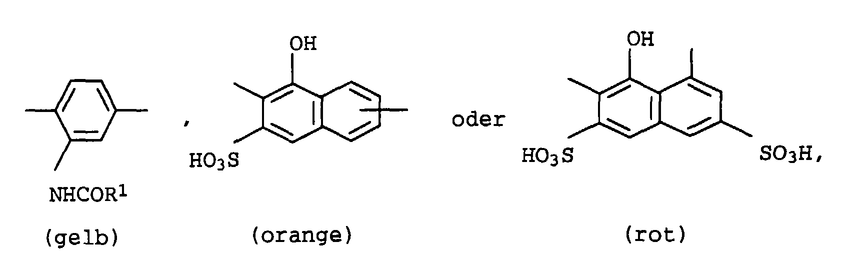 worin jeweils der linke Bindungsstrich die Bindung zur Azobrücke darstellt,
- A: einen Benzol- oder Naphthalinrest, der jeweils einen Reaktivanker aufweisen kann und gegebenenfalls ein- bis dreifach durch C₁-C₄-Alkyl, C₁-C₄-Alkoxy, Hydroxy oder Hydroxysulfonyl substituiert ist, und
- Z: C₁-C₄-Alkanoylamino, das gegebenenfalls durch Carboxyl substituiert ist, Benzoylamino oder einen Rest der Formel 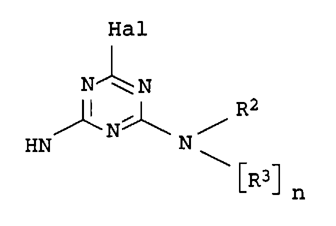 bedeuten,
worin
- n: für 0 oder 1,
- Hal: für Fluor, Chlor oder Brom,
- R¹: für C₁-C₄-Alkyl, das gegebenenfalls durch Hydroxy substituiert ist, Phenyl, Amino, oder einen Rest der Formel

NH ― W ― SO₂― C₂H₄ ― Q,
- R²: für Wasserstoff oder C₁-C₄-Alkyl, das durch ein Sauerstoffatom in Etherfunktion unterbrochen sein kann und gegebenenfalls durch Hydroxy substituiert ist, und
- R³: für ein- oder zweifach durch Hydroxysulfonyl substituiertes Phenyl oder einen Rest der Formel 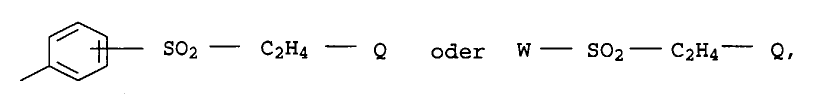 wobei Q jeweils die obengenannte Bedeutung und W jeweils die Bedeutung von C₂-C₄-Alkylen, das durch 1 Sauerstoffatom in Etherfunktion unterbrochen sein kann, besitzen.

Bevorzugt sind Farbstoffmischungen, enthaltend, jeweils bezogen auf das Gewicht der Mischung, 60 bis 95 Gew.-%, vorzugsweise 70 bis 90 Gew.-%, des Farbstoffs der Formel I oder einer Mischung der Farbstoffe der Formeln I und II sowie 5 bis 40 Gew.-%, vorzugsweise 10 bis 30 Gew.-%, mindestens eines gelben, orangen oder roten Reaktivfarbstoffs.

Die Einzelfarbstoffe der neuen Farbstoffmischungen sind bekannt und nach dem Fachmann geläufigen Herstellungsverfahren zugänglich. Einige, wie beispielsweise Reactive Black 5 sind handelsüblich.

Die Farbstoffmischungen sind durch mechanisches Mischen der Einzelkomponenten zugänglich.

Ferner sind Farbstoffmischungen aus Farbstoffen der Formel I und Farbstoffen der Formel II durch Mischsynthese zugänglich, indem man Mischungen der jeweiligen Diazokomponenten im Kupplungsschritt einsetzt. In einer geeigneten Ausführungsform wird beispielsweise ein Gemisch aus 2-(2-Sulfatoethylsulfonyl)anilin und 4-(2-Sulfatoethylsulfonyl)anilin diazotiert und sauer auf die Kupplungskomponente der Formel 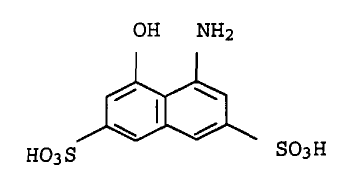 in ortho-Position zur Aminogruppe gekuppelt. In einen zweiten Kupplungsschritt mit 4-(2-Sulfatoethylsulfonyl)anilin als Diazokomponente gelangt man auf vorteilhafte Weise zu einer Mischung eines Farbstoffs I und Reactive Black 5. Anstelle jeden Farbstoff einzeln herzustellen und in einem weiteren Schritt die beiden Einzelfarbstoffe zu mischen, ermöglicht das erfindungsgemäße Verfahren die Direktsynthese der Mischungen.

Die neuen Farbstoffmischungen eignen sich in vorteilhafter Weise zum Färben oder Bedrucken von Hydroxygruppen oder Stickstoffatome aufweisenden organischen Substraten, beispielsweise von Seide, Leder, Wolle, Polyamidfasern oder Polyurethanen oder insbesondere von cellulosehaltigen Fasermaterialien aller Art. Solche Fasermaterialien sind beispielsweise natürliche Cellulosefasern, wie Baumwolle, Leinen oder Hanf, Zellstoff oder regenerierte Cellulose. Die Reaktivfarbstoffmischungen sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffmischungen lassen sich auf verschiedene Weise auf das Fasermaterial applizieren und auf der Faser fixieren, insbesondere in Form von wäßrigen Farbstofflösungen oder -druckpasten. Sie eignen sich sowohl für das Ausziehverfahren als auch zum Färben nach dem Foulardfärbeverfahren, wobei die Ware mit wäßrigen, gegebenenfalls salzhaltigen Farbstofflösungen imprägniert wird und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach die Farbstoffmischung zusammen mit Alkali auf dem Foulard aufgebracht wird und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült.

Die Reaktivfarbstoffmischungen zeichnen sich durch hohe Reaktivität und gutes Fixiervermögen aus. Sie können daher nach dem Ausziehfärbeverfahren bei niedrigen Färbetemperaturen angewandt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffmischungen eignen sich auch zum Druck, vor allem auf Baumwolle, ebenso aber auch zum Bedrucken von Stickstoffatome aufweisenden Fasern, z.B. von Wolle, Seide oder Wolle enthaltenden Mischgeweben.

Die mit den erfindungsgemäßen Farbstoffmischungen hergestellten Färbungen oder Drucke auf Cellulosefasermaterialien besitzen eine hohe Farbstärke und eine hohe Faser-Farbstoff-Bindungsstabilität, sowohl im sauren als auch im alkalischen Bereich, weiterhin eine gute Lichtechtheit und sehr gute Naßechtheitseigenschaften, wie Wasch-, Wasser-, Seewasser-, Überfärbe- und Schweissechtheiten, sowie eine gute Plissierechtheit, Bügelechtheit, Reibechtheit und Chlorechtheit (Chlorbadewasser- und Chlorwäscheechtheit).

Die folgenden Beispiele sollen die Erfindung näher erläutern.

### Beispiel 1

a) 56,2 g 2- (2 -Sulfatoethylsulfonyl)anilin wurden in 400 ml Wasser bei Raumtemperatur gelöst. Durch Außenkühlung senkte man die Temperatur der Lösung auf +5°C ab, setzte 150 g Eis und 50 ml 30 gew.-%ige Salzsäure zu und ließ in ca. 10 min 60 ml 3,33 N wäßrige Natriumnitritlösung eintropfen. Nach 30-minütigem Rühren bei 0° bis +5°C wurde der geringe Überschuß an salpetriger Säure mit 1 g Amidosulfonsäure zerstört.
   Die Suspension des Diazoniumsalzes goß man sodann in eine Dispersion von 62,2 g 1-Amino-8-hydroxynaphthalin-3,6-disulfonsäure, die durch Auflösen in 200 ml Wasser und Natronlauge bei einem pH-Wert von 6 und Fällung mit Salzsäure bis zu einem pH-Wert von 1 unter intensivem Rühren erhalten wurde.
   Nach Rühren über Nacht, wobei die Temperatur auf 22°C anstieg, war die Umsetzung beendet.
b) Zu der unter a) erhaltenen Suspension des Farbstoffes der Formel 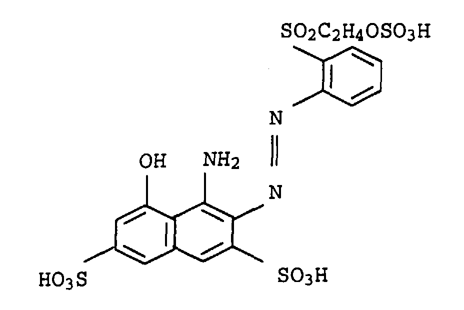 gab man die Suspension des Diazoniumsalzes von 4-(2-Sulfatoethylsulfonyl)anilin, zu, die inzwischen wie folgt bereitet wurde:
   Man löste 56,2 g 4-(2-Sulfatoethylsulfonyl)-anilin in 250 ml Wasser durch Einstreuen von 10 g Soda bis zu einem pH-Wert von 4 auf, kühlte mit 60 g Eis und ließ nacheinander 50 ml 30 gew.-%ige Salzsäure und 60 ml 3,33 N wäßrige Natriumnitritlösung zufließen. Nach einstündigem Rühren bei +5° bis +10°C wurde der geringe Nitrit-Überschuß mit 1 g Amidosulfonsäure zerstört.
   Die Kupplung erfolgte durch Zulauf einer gesättigten wäßrigen Natriumacetatlösung bis zu einem pH-Wert von 4,8. Nach zweistündigem Rühren bei +15°C bis +20°C wurde die erhaltene blaue Farbstofflösung durch Ultrafiltration entsalzt und sprühgetrocknet. Das erhaltene schwarze Pulver enthielt gemäß HPLC-Analyse 90 % des Farbstoffs der Formel 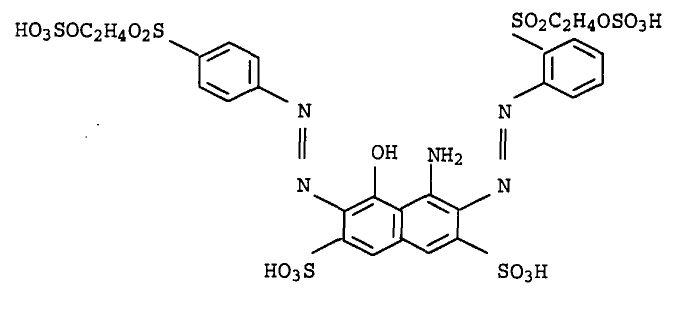 und 5 % zwei der drei möglichen Vinylsulfon-Formen.

70 Gewichtsteile des so erhaltenen Farbstoffs wurden mit 30 Gew.-Teilen des Farbstoffs IIa' (Reactive Black V) vermischt.

Die Farbstoffmischung färbt Baumwolle sowohl nach dem Kaltverweilverfahren als auch bei 40°C oder 60°C nach dem Heißausziehverfahren in marineblauem Ton mit sehr hoher Farbstärke und sehr hohem Fixiergrad.

### Beispiel 2

Man verfuhr analog Beispiel 1, verwendete jedoch anstelle von 1-Amino-8-hydroxynaphthalin-3,6-disulfonsäure nun 1-Amino-8-hydroxynaphthalin-4,6-disulfonsäure. Man erhielt den leicht hypsochromeren Farbstoff der Formel

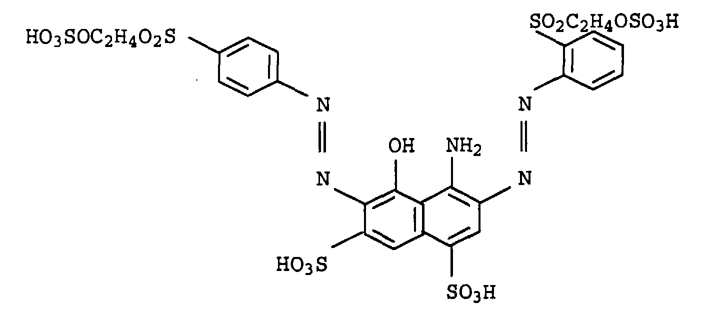

Wiederum wurde eine Mischung bestehend aus 70 Gew.-Teilen dieses Farbstoffs und 30 Gew.-Teilen Reaktiv Black V hergestellt. Ihr Eigenschaftsprofil ist dem der in Beispiel 1 beschriebenen Mischung vergleichbar.

### Beispiel 3

Man verfuhr analog Beispiel 1, verwendete jedoch in Stufe a) anstelle von 56,2 g nur 39,4 g 2-(2-Sulfatoethylsulfonyl)anilin dafür aber zusätzlich 16,9 g 4-(2-Sulfatoethylsulfonyl)anilin als Diazokomponenten. Man erhielt ein Farbstoffgemisch, das aus 70 % des Farbstoffes aus Beispiel 1 und 30 % des Farbstoffs IIa' besteht.

In analoger Weise werden Mischungen mit IIa und den in der folgenden Tabelle aufgeführten Farbstoffen I erhalten.

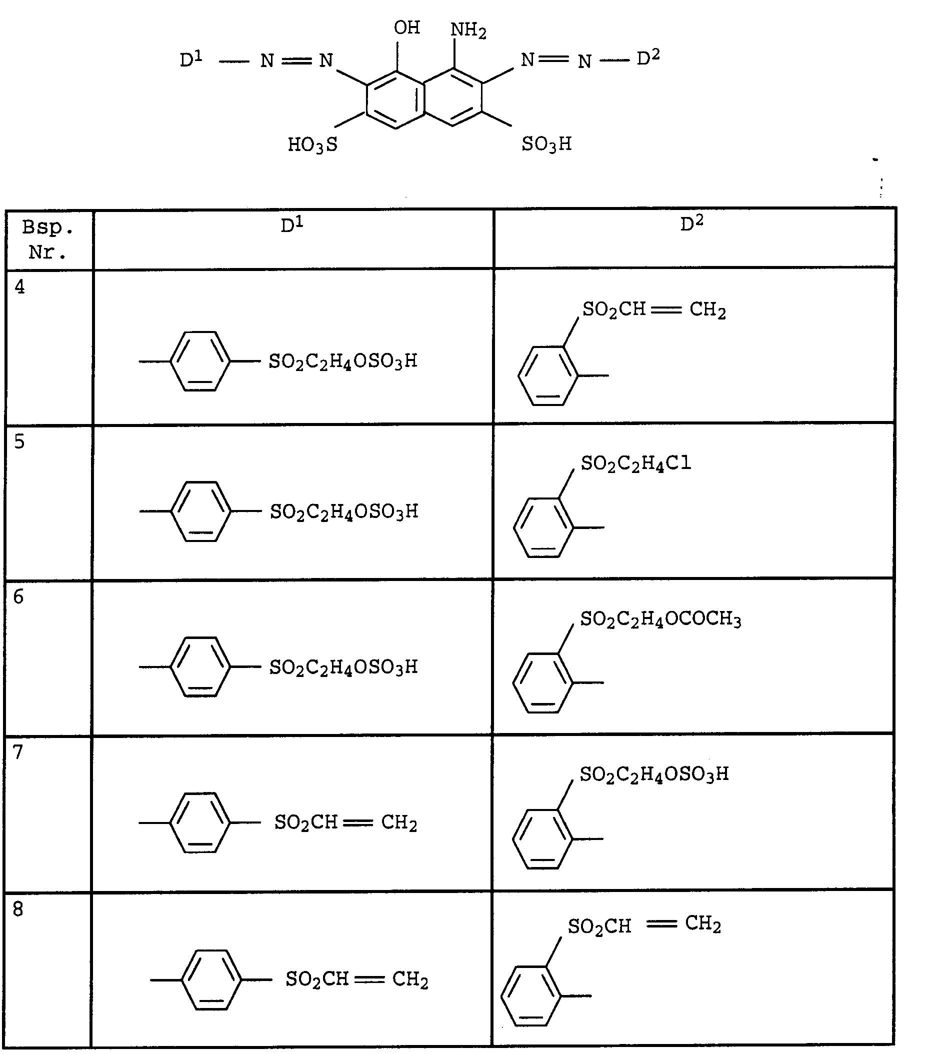

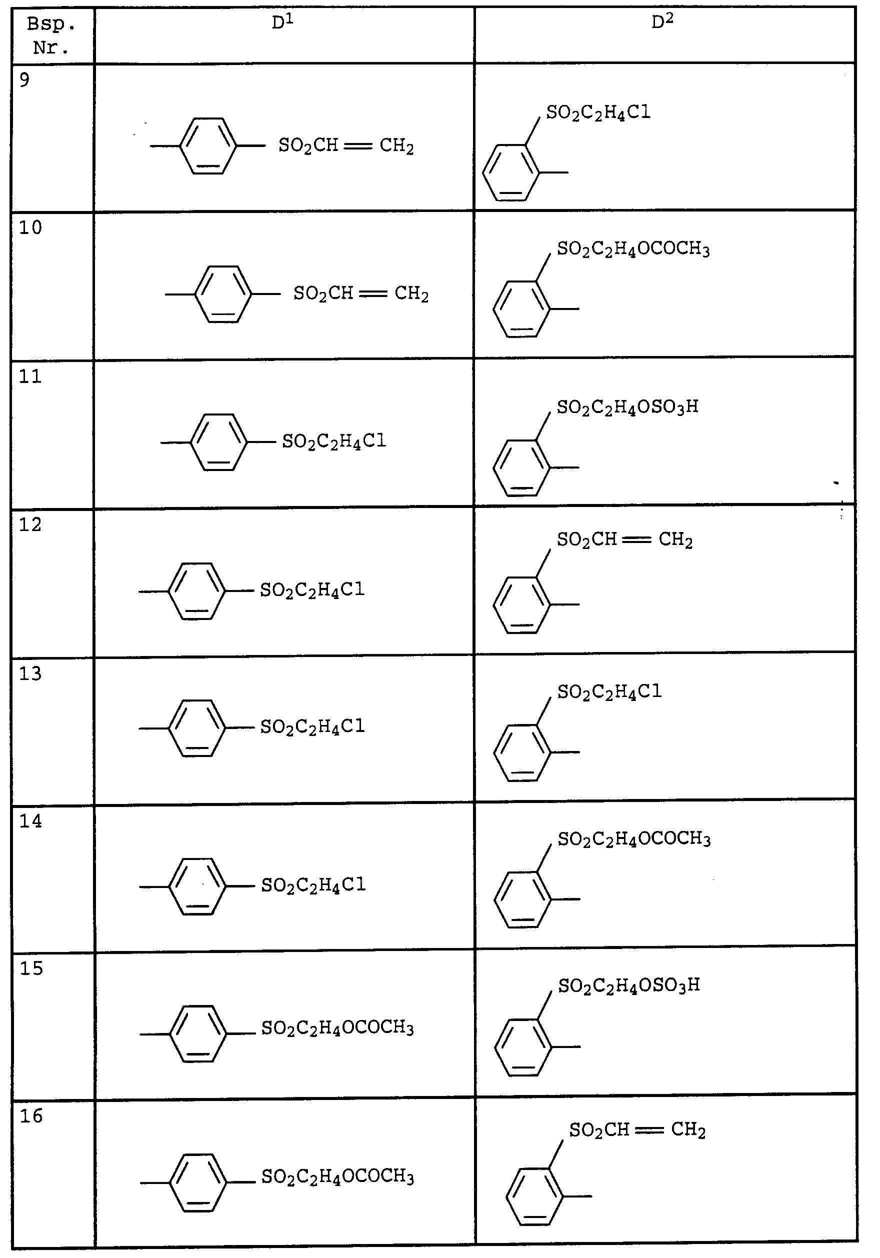

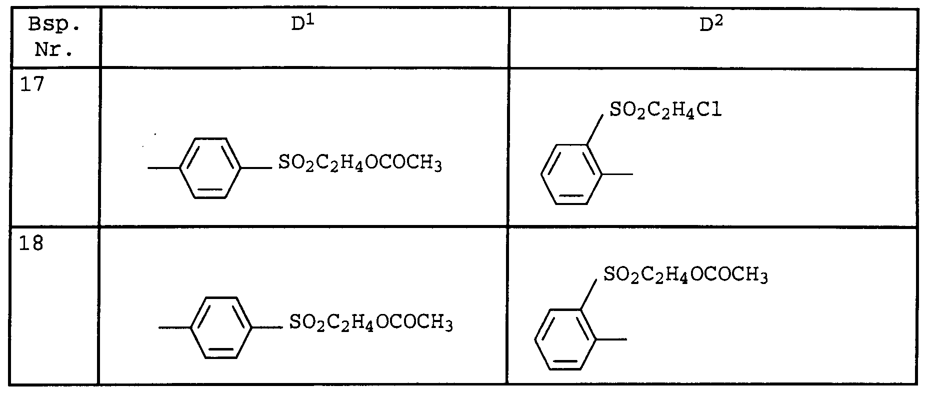

### Beispiel 19

Man mischte den Farbstoff der Formel I mit C.I. Reactive Orange 76 im Verhältnis 2:1 sowohl mechanisch in Pulverform als auch in Form salzarmer Syntheselösungen, aus denen die Pulvermischung durch Sprühtrocknung gewonnen wird. Das Farbstoffgemisch als Pulver oder Lösung färbt Baumwolle gemäß den Färbebeispielen in schwarzen Tönen.

Zu ähnlichen schwarzen Nuancen gelangt man auch mit einer Mischung des Farbstoffes der Formel I mit C.I. Reactive Orange 72 und C.I. Reactive Red 239 im Verhältnis 14:5:1.

Die in den folgenden Färbe- und Druckverfahren angegebenen Teile sind Gewichtsteile.

### Färbevorschrift 1

2 Teile der in Beispiel 3 beschriebenen Farbstoffmischung werden in 400 Teilen Wasser gelöst. Dazu gibt man 1500 Teile einer Lösung, die pro Liter 53 g Natriumchlorid enthält. In dieses Färbebad gibt man bei 40°C 100 Teile Baumwollgewebe. Nach 45 min werden 100 Teile einer Lösung, die pro Liter 16 g Natriumhydroxyd und 20 g kalziniertes Soda enthält, zugegeben. Die Temperatur des Färbebades wird weitere 45 min bei 40°C gehalten. Danach wird die gefärbte Ware gespült, 15 min mit einem nichtionogenen Waschmittel kochend geseift, nochmals gespült und getrocknet.

### Färbevorschrift 2

2 Teile der in Beispiel 3 beschriebenen Farbstoffmischung werden in 400 Teilen Wasser gelöst. Dazu gibt man 1500 Teile einer Lösung, die pro Liter 53 g Natriumchlorid enthält. In dieses Färbebad gibt man bei 35°C 100 Teile eines Baumwollgewebes. Nach 20 min werden 100 Teile einer Lösung, die pro Liter 16 g Natriumhydroxyd und 20 g kalziniertes Soda enthält, zugegeben. Die Temperatur des Färbebades wird weitere 15 min bei 35°C gehalten. Danach wird die Temperatur innerhalb von 20 min auf 60°C erhöht. Die Temperatur wird weitere 35 min bei 60°C gehalten. Danach wird gespült, 15 min mit einem nichtionogenen Waschmittel kochend geseift, nochmals gespült und getrocknet.

### Färbevorschrift 3

8 Teile der in Beispiel 3 beschriebenen Farbstoffmischung werden in 400 Teilen Wasser gelöst. Dazu gibt man 1400 Teile einer Lösung, die pro Liter 100 g Natriumsulfat enthält. In dieses Färbebad gibt man bei 25°C 100 Teile eines Baumwollgewebes ein. Nach 10 min werden 200 Teile einer Lösung, die pro Liter 150 g Trinatriumphosphat enthält, zugegeben. Danach wird die Temperatur des Färbebades innerhalb 10 min auf 60°C erhöht. Die Temperatur wird weitere 90 min bei 60°C gehalten. Danach wird gespült, 15 min mit einem nichtionogenen Waschmittel kochend geseift, nochmals gespült und getrocknet.

### Färbevorschrift 4

4 Teile der in Beispiel 3 beschriebenen Farbstoffmischung werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so daß es um 70 % seines Gewichts zunimmt, und dann auf einer Kaule aufgewickelt. Das Baumwollgewebe wird so während 3 h bei Raumtemperatur gelagert. Danach wird die gefärbte Ware gespült, 15 min mit einem nichtionogenen Waschmittel kochend geseift, nochmals gespült und getrocknet.

### Färbevorschrift 5

6 Teile der in Beispiel 3 beschriebenen Farbstoffmischung werden in 50 Teilen Wasser gelöst. Dazu gibt man 50 Teile einer Lösung, die pro Liter 16 g Natriumhydroxyd und 0,04 Liter Wasserglas (38°Be) enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 10 h bei Raumtemperatur gelagert. Danach wird die gefärbte Ware gespült, 15 min mit einem nichtionogenen Waschmittel kochend geseift, nochmals gespült und getrocknet.

### Färbevorschrift 6

2 Teile der in Beispiel 3 beschriebenen Farbstoffmischung werden unter Zusatz von 0,5 Teilen 3-Nitrobenzolsulfonsäure-Natriumsalz in 100 Teilen Wasser gelöst. Mit der erhaltenen Lösung wird ein Baumwollgewebe imprägniert, so daß es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, guetscht auf 75 % Gewichtszunahme ab, dämpft die Färbung während 30 sec bei 100 bis 102°C, spült, seift 15 min kochend mit einem nichtionogenen Waschmittel, spült und trocknet.

### Druckvorschrift 1

3 Teile der in Beispiel 3 beschriebenen Farbstoffmischung werden unter schnellem Rühren in 100 Teile einer Stammverdickung, enthaltend 50 Teile 5 gew.-%ige Natriumalginatverdickung, 27,8 Teile Wasser, 20 Teile Harnstoff, 1 Teil 3-Nitrobenzolsulfonsäure-Natriumsalz sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 min bei 102°C in gesättigtem Dampf. Das bedruckte Gewebe wird dann gespült, gegebenenfalls kochend geseift und nochmals gespült, und anschließend getrocknet.

### Druckvorschrift 2

5 Teile der in Beispiel 3 beschriebenen Farbstoffmischung werden unter schnellem Rühren in 100 Teile einer Stammverdickung, enthaltend 50 Teile 5 gew.-%ige Natriumalginatverdickung, 36,5 Teile Wasser, 10 Teile Harnstoff, 1 Teil 3-Nitrobenzolsulfonsäure-Natriumsalz sowie 2,5 Teile Natriumhydrogencarbonat, eingestreut. Mit der so erhaltenen Druckpaste bedruckt man ein Baumwollgewebe, trocknet und dämpft den erhaltenen bedruckten Stoff 8 min bei 102°C in gesättigtem Dampf. Das bedruckte Gewebe wird dann gespült, gegebenenfalls kochend geseift und nochmals gespült und anschließend getrocknet.

## Patentansprüche

1. Farbstoffmischungen, enthaltend mindestens einen Farbstoff der Formel I 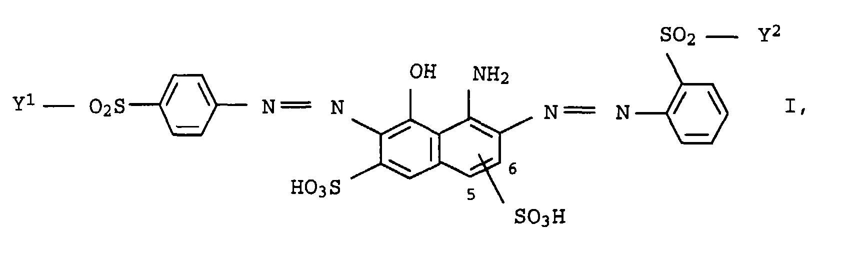 in der Y¹ und Y² unabhängig voneinander Vinyl oder einen Rest der Formel CH₂CH₂Q bedeuten, worin Q für eine unter alkalischen Reaktionsbedingungen abspaltbare Gruppe steht, sowie mindestens einen gelben, orangen, roten oder blauen Farbstoff mit Reaktivankerresten.

2. Farbstoffmischungen nach Anspruch 1, enthaltend mindestens einen Farbstoff der Formel I und mindestens einen Farbstoff aus der Gruppe der blauen Farbstoffe der allgemeinen Formel II 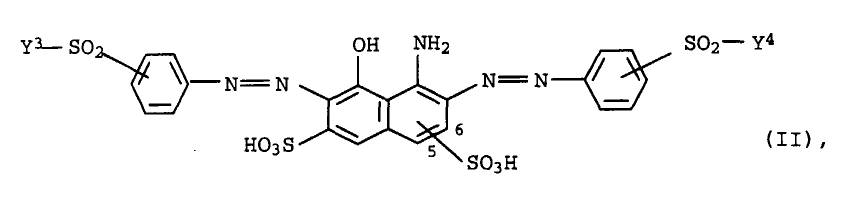 in der Y³ und Y⁴ unabhängig voneinander Vinyl oder einen Rest der Formel CH₂CH₂Q bedeuten, und die Farbstoffe die folgenden Substituentenkombination aufweisen:
| Y³SO₂- | Y⁴SO₂- | Farbstoff |
|---|---|---|
| para | para | IIa |
| meta | ortho | IIb |
| ortho | ortho | IIc |
| meta | para | IId |
| ortho | meta | IIe |
| meta | meta | IIf |
| para | meta | IIg |
| ortho | para | IIh |

3. Farbstoffmischungen nach Anspruch 1, enthaltend mindestens einen Farbstoff der Formel I und mindestens einen Farbstoff der Formel IIa.

4. Farbstoffmischungen nach Anspruch 1, enthaltend mindestens einen Farbstoff der Formel I und mindestens einen Farbstoff der Formel IIb, IIc oder IId.

5. Farbstoffmischungen nach Anspruch 1, enthaltend mindestens einen Farbstoff der Formel I sowie mindestens einen gelben, orangen oder roten Farbstoff mit Reaktivankerresten.

6. Farbstoffmischungen nach den Ansprüchen 1 bis 5, dadurch gekennzeichnet, daß Q in Formel I für Chlor, Sulfato oder C₁-C₄-Alkanoyloxy steht.

7. Farbstoffmischungen nach den Ansprüchen 1 bis 6, dadurch gekennzeichnet, daß Y¹ und Y² in Formel I identisch sind.

8. Farbstoffmischungen nach den Ansprüchen 1 bis 7, dadurch gekennzeichnet, daß die SO₃H-Gruppe in Formel I in Ringposition 6 steht.

9. Verwendung der Farbstoffmischungen gemäß den Ansprüchen 1 bis 8 zum Färben oder Bedrucken von Hydroxygruppen oder Stickstoffatome aufweisenden organischen Substraten.

10. Verfahren zur Herstellung von Farbstoffmischungen gemäß den Ansprüchen 2 bis 4, dadurch gekennzeichnet, daß man Mischungen der entsprechenden Disazokomponenten im Kupplungsschritt einsetzt.
